# EUROPÄISCHE PATENTANMELDUNG

(11) **EP 1 086 967 A2**
(43) Veröffentlichungstag der Anmeldung: **28.03.2001**
(21) Anmeldenummer: 00118218.7
(22) Anmeldetag: 01.09.2000
(51) Int. Cl.: C08G 18/08, G11B 5/702

(54) **Blockcopolymeres Polyurethan, Verfahren zu dessen Herstellung sowie daraus hergestellte Bindemittel und Formkörper**

(30) Priorität: 22.09.1999 DE 19945400
(71) Anmelder: EMTEC Magnetics GmbH, 67059 Ludwigshafen (DE)
(72) Erfinder: Raether, Benedikt Dr., 67117 Limburgerhof (DE); Hees, Ulrike Dr., 68167 Mannheim (DE); Kress, Ria, Dr., 67063 Ludwigshafen (DE); Kohl, Albert, 67229 Laumersheim (DE); Bradshaw, Richard, Dr., Tucson, Arizona 85748 (US)
(74) Vertreter: Honeit, Ute

(57) **Zusammenfassung**

Die Erfindung betrifft ein blockcopolymeres Polyurethan, ein Verfahren zu dessen Herstellung, dessen Verwendung sowie daraus hergestellte Formkörper und Bindemittel. Das erfindungsgemässe thermoplastische Polyurethan enthält mindestens ein Hartsegment und mindestens ein Weichsegment, wobei das Hartsegment mindestens eine Ankergruppe trägt. Insbesondere betrifft die Erfindung die Verwendung solcher Polyurethane zur Herstellung von magnetischen Aufzeichnungsmedien.

## Beschreibung

Die Erfindung betrifft ein thermoplastisches blockcopolymeres Polyurethan, ein Verfahren zu dessen Herstellung, dessen Verwendung sowie daraus hergestellte Bindemittel und Formkörper. Ein erfindungsgemäßes Bindemittel enthält mindestens ein erfindungsgemäßes thermoplastisches, blockcopolymeres Polyurethan, das mindestens ein Hartsegment und mindestens ein Weichsegment aufweist, wobei das Hartsegment mindestens eine Ankergruppe trägt. Insbesondere betrifft die Erfindung die Verwendung solcher Bindemittel oder aus solchen Bindemitteln hergestellte Formkörper zur Herstellung von magnetischen Aufzeichnungsmedien.

Als Polymere zur Herstellung von magnetischen Aufzeichnungsmedien eignen sich bekanntermaßen verschiedene Stoffgruppen. Als besonders vorteilhaft haben sich bislang die Polyurethane erwiesen, die vor allem die Elastizität der magnetischen Aufzeichnungsmedien bzw. von Beschichtungen solcher magnetischen Aufzeichnungsmedien deutlich verbessern. Als nachteilig haben sich bei den Polyurethanen jedoch häufig deren geringe Härte und Abriebfestigkeit erwiesen.

Dieses Problem wird beispielsweise in der Patentanmeldung mit dem Aktenzeichen 19626824.9-53 beschrieben. Die gemäß dieser Druckschrift erhältlichen Polyurethane weisen zwar in Bezug auf Härte und Abriebfestigkeit deutlich verbesserte Werte auf, die Aufzeichnungsstabilität konnte jedoch unter bestimmten Voraussetzungen, beispielsweise bei erhöhter Lagerungs- oder Betriebstemperatur nachlassen.

Die EP-A 0 681 289 betrifft ionische Phosphonate, die zur Verwendung in Bindemitteln für magnetische Aufzeichnungsmedien geeignet sind. Die Druckschrift beschreibt beispielsweise Polyurethane, die solche ionischen Phosphonate enthalten und deren Verwendung in magnetischen Aufzeichnungsmedien. Aus der Druckschrift geht jedoch nicht hervor, daß eine Anordnung von Ankergruppen im Hartsegment eines Polyurethanpolymeren zu Polymeren führt, die bei einer Verwendung zur Herstellung magnetischer Aufzeichnungsmedien eine erhöhte Aufzeichnungsstabilität bewirken.

Der vorliegenden Erfindung lag demnach die Aufgabe zugrunde, ein Polymeres zur Verfügung zu stellen, das bei einer Verwendung zur Herstellung von magnetischen Aufzeichnungsmedien eine geeignete Härte und Abriebfestigkeit aufweist und darüber hinaus auch bei erhöhter Lagerungs- oder Betriebstemperatur eine ausreichende Aufzeichnungsstabilität besitzt.

Gegenstand der Erfindung ist daher ein thermoplastisches Blockcopolyurethan mit mindestens einem Weichsegment A und mindestens einem Hartsegment B, wobei mindestens ein Hartsegment B im thermoplastischen Blockcopolyurethan mindestens eine anionische oder mindestens eine kationische oder mindestens eine nichtionische Ankergruppe L oder ein Gemisch aus zwei oder mehr solcher Ankergruppen aufweist, sowie ein Bindemittel, das mindestens ein wie oben definiertes Blockcopolyurethan enthält.
Unter einem Bindemittel wird im Rahmen der vorliegenden Erfindung ein Gemisch aus zwei oder mehr Polymeren verstanden, die nach erfolgter chemischer oder physikalischer Trocknung wesentlich am Erhalt stabiler Dispersionen und an einer ausreichenden mechanischen Stabilität eines aus dem Bindemittel hergestellten magnetischen Aufzeichnungsmediums beteiligt sind.

Unter einem thermoplastischen Blockcopolyurethan wird im Rahmen der vorliegenden Erfindung ein Polyurethan verstanden, das einen blockweisen Aufbau der Struktur A-B A aufweist, wobei diese einzelnen Blöcke mikrophasensepariert vorliegen. Bei einer bestimmten Temperatur oder innerhalb eines bestimmten Temperaturbereichs weist das thermoplastische Blockcopolyurethan einen Erweichungspunkt oder einen Erweichungsbereich auf. Oberhalb dieses Erweichungspunktes oder -bereichs ist das Polyurethan plastisch verformbar, wobei es bei einer Rückkehr zu Temperaturen unterhalb dieses Erweichungspunktes oder -bereichs die im plastischen Zustand hergestellte Form behält und sich im wesentlichen wie ein Duromeres verhält.

Unter einem Hartsegment wird im Rahmen der vorliegenden Erfindung ein Segment eines thermoplastischen Blockcopolyurethanmoleküls verstanden, wobei das Hartsegment eine Glasübergangstemperatur oberhalb von mindestens etwa 20 bis 40 °C, vorzugsweise von mindestens etwa 50°C, aufweist.

Unter einem Weichsegment wird im Rahmen der vorliegenden Erfindung ein Segment eines Polyurethanmoleküls verstanden, das kovalent mit einem Hartsegment verbunden ist und eine Glasübergangstemperatur von weniger als etwa 20 °C aufweist.

Unter einer Ankergruppe wird im Rahmen der vorliegenden Erfindung eine funktionelle Gruppe verstanden, die zu Wechselwirkungen mit ionischen oder nichtionischen, polaren Verbindungen in der Lage ist. Insbesondere werden unter Ankergruppen solche funktionellen Gruppen verstanden, die Wechselwirkungen mit der Oberfläche von anorganischen Füllstoffmaterialien, insbesondere mit der Oberfläche von anorganischen magnetischen oder magnetisierbaren Pigmenten einzugehen in der Lage sind.

Im nachfolgenden Text werden der Einfachheit halber die im Rahmen des vorliegenden Textes beschriebenen thermoplastischen Blockcopolyurethane als "thermoplastische Polyurethane"oder einfach als "Polyurethane" bezeichnet. Polyurethane, die keine thermoplastischen Eigenschaften aufweisen oder keine Blockcopolymere sind werden nachfolgend ausdrücklich als solche gekennzeichnet.

Das erfindungsgemäße Polyurethan kann sowohl in einem Weichsegment als auch in einem Hartsegment Ankergruppen L aufweisen. Erfindungsgemäß ist jedoch die Zahl der Ankergruppen die sich in einem Hartsegment des thermoplastischen Polyurethans befinden größer als die Zahl der Ankergruppen die sich in einem Weichsegment (A) oder mehreren Weichsegmenten (A) befinden. In einer bevorzugten Ausführungsform der Erfindung ist die Zahl der Ankergruppen die sich in der Gesamtzahl der im Polyurethan befindlichen Hartsegmente (B) befinden mindestens fünfmal so groß, vorzugsweise mindestens 10 mal so groß, wie die Gesamtzahl der Ankergruppen in den Weichsegmenten (A). In einer weiteren bevorzugten Ausführungsform der Erfindung weist das erfindungsgemäße thermoplastische Polyurethan im wesentlichen keine Ankergruppen im Weichsegment (A) oder den Weichsegmenten (A) auf.

In einer bevorzugten Ausführungsform der Verbindung enthält das erfindungsgemäße Polyurethan als Ankergruppe L eine Carboxylgruppe, eine Sulfonsäuregruppe, eine
Phosphonsäuregruppe, eine Phosphorsäuregruppe oder ein geeignetes Salz einer solche Gruppe oder eine quaternäre Aminogruppe oder Derivate der genannten Gruppen, beispielsweise deren Ester oder ein primäres, sekundäres oder tertiäres Amin oder zwei oder mehr der jeweils genannten Ankergruppen oder ein Gemisch aus zwei oder mehr der genannten Ankergruppen.

In einer bevorzugten Ausführungsform betrifft die Erfindung ein thermoplastisches Polyurethan der allgemeinen Formel I

Y-(A-B(L)ₘ-A-)ₙY (I)

oder ein Polyurethan der allgemeinen Formel II

Y-(A-B(L)ᵣ-A-Z-)ₙ-A-B(L)ₘ-A-Y (II),

wobei A, B und L die oben genannte Bedeutung haben Z für den Rest einer gegenüber Y unter Ausbildung einer kovalenten Bindung mindestens difunktionelle Verbindung X-Z-X, Y für eine gegenüber den funktionellen Gruppen X der Verbindung Z unter Ausbildung einer kovalenten Bindung reaktive funktionelle Gruppe, X für mindestens eine gegenüber den funktionellen Gruppen Y unter Ausbildung einer kovalenten Bindung reaktive funktionelle Gruppe, n für eine Zahl von 1 bis 10, m für eine Zahl von 1 bis 10 und r für eine Zahl von 0 bis 10 steht, wobei die Zahl der Ankergruppen L im gesamten Blockcopolyurethan 1 bis n*m+1 (Formel I) bzw. 1 bis n*r+m (Formel II) beträgt.

Das erfindungsgemäße Polyurethan enthält mindestens eine Sorte Weichsegment A. Es ist im Rahmen der vorliegenden Erfindung jedoch ebensogut möglich, daß das thermoplastische Polyurethan zwei oder mehr verschiedene Sorten von Weichsegmenten A enthält. Bei den zwei oder mehr verschiedenen Sorten von Weichsegmenten A kann es sich beispielsweise um identische Weichsegmente handeln, das heißt, um Weichsegmente, die einen im wesentlichen identischen chemischen Aufbau aufweisen. Es ist jedoch im Rahmen der vorliegenden Erfindung ebensogut möglich, daß zwei oder mehr unterschiedliche Weichsegmente A eingesetzt werden. So kann ein im Rahmen eines erfindungsgemäßen Bindemittels eingesetztes thermoplastisches Polyurethan beispielsweise einen Polyester und einen Polyether als Weichsegmente A aufweisen.

Grundsätzliche eignen sich als Weichsegmente A beispielsweise Polyester, Polyether, Polyacetale, Polycarbonate, Polyesterether und dergleichen.

Die genannten, zum Einsatz als Weichsegmente A geeigneten Verbindungen weisen mindestens eine funktionelle Gruppe Y auf. In einer bevorzugten Ausführungsform der Erfindung weisen die als Weichsegmente A geeigneten Verbindungen mindestens zwei funktionelle Gruppen Y auf. In einer weiteren bevorzugten Ausführungsform der Erfindung sind die funktionellen Gruppen Y endständig an den zum Einsatz als Weichsegment A geeigneten Verbindungen angebracht.

Grundsätzlich steht Y für eine funktionelle Gruppe, die zur Reaktion mit einer NCO-Gruppe unter Ausbildung einer kovalenten Bindung fähig ist. In einer bevorzugten Ausführungsform der Erfindung steht Y für OH, NH, NR, SH oder COOH, wobei R für einen linearen oder verzweigten, gesättigten oder ungesättigten Alkylrest mit 1 bis 24 C-Atomen oder einen Arylrest mit 6 bis 24 C-Atomen steht.
In einer weiteren bevorzugten Ausführungsform der Erfindung steht Y für eine OH-, NH- oder NR-Gruppe, insbesondere für eine OH-Gruppe. Im weiteren Verlauf des Textes werden zur Herstellung von Weichsegmenten A geeignete Verbindungen beschrieben. Der Übersichtlichkeit halber werden die Verbindungen, soweit nichts anderes angegeben ist, als OH-Gruppen tragende Verbindungen dargestellt. Es ist jedoch im Rahmen der vorliegenden Erfindung ebensogut möglich, entsprechende Verbindungen einzusetzen, die anstatt der in der weiteren Beschreibung dargestellten OH-Gruppe eine andere gegenüber NCO-Gruppen reaktive funktionelle Gruppe, beispielsweise eine der anderen für Y genannten funktionellen Gruppen tragen, soweit eine entsprechende Verbindung existiert oder herstellbar ist.

Zur Bildung von Weichsegmenten geeignete Polyester sind beispielsweise überwiegend lineare Polymere mit endständigen OH-Gruppen, bevorzugt solche mit zwei oder drei, insbesondere mit zwei OH-Endgruppen. Die Polyesterpolyole lassen sich in einfacher Weise durch Veresterung von linearen oder verzweigten, gesättigten oder ungesättigten aliphatischen oder entsprechend geeigneten aromatischen Dicarbonsäuren mit 4 bis etwa 15 C-Atomen, vorzugsweise 4 bis etwa 10 C-Atomen mit Glykolen, bevorzugt Glykolen mit etwa 2 bis etwa 25 C-Atomen oder durch Polymerisation von Lactonen mit etwa 3 bis etwa 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure oder Bernsteinsäure, oder Gemische aus zwei oder mehr der genannten Dicarbonsäuren einsetzen. Geeignete aromatische Dicarbonsäuren sind Terephthalsäure, Isophthalsäure, Phthalsäure oder Mischungen aus zwei oder mehr dieser Dicarbonsäuren. Ebenso geeignete sind Gemische aus einer oder mehreren der genannten aromatischen Dicarbonsäuren mit aliphatischen oder weiteren aromatischen Dicarbonsäuren, beispielsweise mit Diphensäure, Pentadiensäure, Bernsteinsäure oder Adipinsäure.

Zur Herstellung der Polyesterpolyole kann es gegebenenfalls vorteilhaft sein, anstelle der Dicarbonsäuren entsprechende Säurederivate wie Carbonsäureanhydride oder Carbonsäurechloride zu verwenden, sofern diese erhältlich sind.

Die im Rahmen der vorliegenden Erfindung zum Einsatz als Weichsegment geeigneten Polyesterpolyole sind durch Umsetzung von Dicarbonsäuren mit entsprechenden Glykolen herstellbar. Grundsätzlich zur Herstellung der Polyesterpolyole geeignete Glykole sind lineare oder verzweigte, gesättigte oder ungesättigte, aliphatische oder aromatische Glykole. Beispielsweise sind dies Diethylenglykol, 1,2-Ethandiol, 1,3-Propandiol, 2-Methyl-1,3-propandiol, 1,4-Butandiol, 1,5-Pentandiol, 1,6-Hexandiol, 1,7-Heptandiol, 1,8-Octandiol, 1,9-Nonandiol, 1,10-Decandiol sowie die entsprechenden höheren Homologen, wie sie sich durch schrittweise Verlängerung der Kohlenstoffkette der genannten Verbindungen bilden lassen sowie beispielsweise 2,2,4-Trimethylpentandiol-1,5, 2,2-Dimethylpropandiol-1,3, 1,4-Dimethylolcyclohexan, 1,4-Diethanolcyclohexan, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol, Methyldiethanolamin oder aromatisch-aliphatische oder aromatisch-cycloaliphatische Diole mit 8 bis etwa 30 C-Atomen, wobei als aromatische Strukturen heterocyclische Ringsysteme oder vorzugsweise isocyclische Ringsysteme wie Naphthalin- oder insbesondere Benzolderivate wie Bisphenol A eingesetzt werden können, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate, die Hydrierungsprodukte der genannten Bisphenol-A- und Bisphenol-F-Derivate oder die Produkte der entsprechenden Umsetzung von einer Verbindung oder einem Gemisch aus zwei oder mehr der genannten Verbindungen mit einem Alkylenoxid mit zwei bis etwa 8 C-Atomen oder einem Gemisch aus zwei oder mehr solcher Alkylenoxide.

In einer bevorzugten Ausführungsform der Erfindung werden 1,2-Ethandiol, 1,3-Propandiol, 2-Methyl-1,3-propandiol, 1,4-Butandiol, 1,6-Hexandiol, 2,2-Dimethylpropandiol-1,3, 1,4-Dimethylolcyclohexan, 1,4-Diethanolcyclohexan und ethoxylierte oder propoxylierte Produkte des 2,2-Bis-(4-hydroxyphenylen)-propan (Bisphenol A) eingesetzt. Je nach den gewünschten Eigenschaften der mit den entsprechenden Weichsegmenten ausgestatteten thermoplastischen Polyurethane können die genannten Polyesterpolyole alleine oder als Mischung von zwei oder mehr der genannten Polyesterpolyole in verschiedenen Mengenverhältnissen zur Herstellung der thermoplastischen Polyurethane eingesetzt werden. Als Lactone für die Herstellung der Polyesterpolyole eignen sich zum Beispiel α,α-Dimethyl-γ-propiolacton, β-Butyrolacton und ε-Caprolacton.

Ebenfalls zum Einsatz als Weichsegmente A bei der Herstellung der obengenannten thermoplastischen Polyurethane geeignet sind die Polyetherpolyole. Unter Polyetherpolyolen werden im wesentlichen lineare, im Sinne des oben gesagten endständige OH-Gruppen aufweisende Substanzen mit Etherbindungen verstanden. Geeignete Polyetherpolyole können beispielsweise durch Polymerisation von cyclischen Ethern wie Tetrahydrofuran oder durch Umsetzung von einem oder mehreren Alkylenoxiden mit 2 bis 4 C-Atomen im Alkylenrest mit einem Startermolekül, das zwei aktive Wasserstoffatome aufweist, hergestellt werden. Als Alkylenoxide eignen sich beispielsweise Ethylenoxid, 1,2-Propylenoxid, Epichlorhydrin, 1,2-Butylenoxid oder 2,3-Butylenoxid oder Gemische aus zwei oder mehr davon.

Die Alkylenoxide können einzeln, alternierend nacheinander oder als Gemische aus zwei oder mehr der genannten Alkylenoxide verwendet werden. Als Startermolekül kommen beispielsweise Wasser, Glykole wie Ethylenglykol, Propylenglykol, 1,4-Butandiol, 1,5-Pentandiol und 1,6-Hexandiol, Amine wie Ethylendiamin, 1,6-Hexamethylendiamin oder 4,4'-Diaminodiphenylmethan sowie Aminoalkohole wie Methylethanolamin in Betracht. Grundsätzlich sind jedoch alle obengenannten, mindestens difunktionellen Verbindungen, wie sie zum Aufbau der Weichsegmente beschrieben wurden, als Startermoleküle einsetzbar. Geeignete Polyesterpolyole und Polyetherpolyole sowie deren Herstellung nennt beispielsweise die EP-B 0 416 386.

Im Rahmen der vorliegenden Erfindung können als Weichsegmente A beispielsweise auch Polycarbonate eingesetzt werden. In einer bevorzugten Ausführungsform der Erfindung werden Polycarbonate eingesetzt, die im wesentlichen linear sind und über mindestens zwei, vorzugsweise endständige, OH-Gruppen verfügen. Die Herstellung entsprechender Polycarbonatpolyole erfolgt beispielsweise durch Umsetzung eines der obengenannten difunktionellen Alkohole oder eines Gemischs aus zwei oder mehr solcher difunktioneller Alkohole mit Phosgen. Geeignete Polycarbonatpolyole, beispielsweise solche auf 1,6-Hexandiol Basis sowie deren Herstellung, werden beispielsweise in der US-A 4,131,731 beschriebenen.

In Mengen von bis zu etwa 5 Gew.-%, bezogen auf die gesamte Masse der im thermoplastischen Polyurethan enthaltenen Weichsegmente, können beispielsweise auch aliphatische Alkohole mit drei oder mehr funktionellen Gruppen und 3 bis etwa 15, vorzugsweise etwa 3 bis etwa 10 C-Atomen bei der Herstellung der Weichsegmente eingesetzt werden. Entsprechend geeignete Verbindungen sind beispielsweise Trimethylolpropan, Triethylolpropan, Glyzerin, Pentaerythrit, Sorbit, Mannit und weitere Zuckeralkohole mit bis zu etwa 10 OH-Gruppen pro Molekül. Ebenfalls zur Herstellung der Weichsegmente einsetzbar sind die entsprechenden Derivate der genannten Verbindungen, wie sie sich durch Umsetzung mit einem Alkylenoxid mit 2 bis etwa 4 C-Atomen oder einem Gemisch aus zwei oder mehr solcher Alkylenoxide erhalten lassen. In einer weiteren Variante können auch Carbonsäuren oder Derivate davon mit drei oder mehr funktionellen Gruppen eingesetzt werden. Die genannten Verbindungen sind jeweils alleine oder auch als Gemische aus zwei oder mehr der genannten Verbindungen einsetzbar.

In einer bevorzugten Ausführungsform der Erfindung werden beispielsweise Polyester als Weichsegment (A) eingesetzt, die aus einer Umsetzung von Adipinsäure oder Isophthalsäure und oder deren Gemisch mit 1,6-Hexandiol oder Cyclohexandimethanol oder deren Gemisch erhältlich sind.

In einer bevorzugten Ausführungsform der Erfindung weisen die Weichsegmente (A) Glasübergangstemperaturen von etwa -50 °C bis etwa 20 °C auf. In einer weiteren bevorzugten Ausführungsform der Erfindung liegen die Glasübergangstemperaturen der Weichsegmente (A) in einem Bereich von etwa -30 °C bis etwa 0 °C. Um die gewünschten mechanischen Eigenschaften des erfindungsgemäßen thermoplastischen Polyurethans zu gewährleisten, sollte das Weichsegment (A) ein Molekulargewicht von etwa 500 bis etwa 25.000 g/mol aufweisen. In einer bevorzugten Ausführungsform der Erfindung werden Weichsegmente (A) eingesetzt, die ein Molekulargewicht von etwa 2000 bis etwa 10.000 g/mol, beispielsweise etwa 3000 bis etwa 7000 g/mol aufweisen.

Zum Einsatz als Weichsegmente (A) geeignete Verbindungen der vorgenannten Verbindungsklassen können bereits in einem zum Einsatz als Weichsegment (A) geeigneten Molekulargewichtsbereich vorliegen. Es ist jedoch ebensogut möglich, Verbindungen der obengenannten Verbindungsklassen zur Herstellung von Weichsegmente (A) einzusetzen, die ein Molekulargewicht aufweisen, das unterhalb des zum Einsatz als Weichsegment (A) geeigneten Molekulargewichts oder gewünschten Molekulargewichts liegt. In diesem Fall ist es im Rahmen der vorliegenden Erfindung möglich, solche Verbindungen der obengenannten Verbindungsklassen durch Umsetzung mit entsprechenden difunktionellen Verbindungen bis zum Erreichen des erforderlichen oder gewünschten Molekulargewichts zu verlängern. In Abhängigkeit von der Endgruppe Y eignen sich hier zu beispielsweise Dicarbonsäuren, difunktionelle Epoxyverbindungen oder Diisocyanate, wobei in einer bevorzugten Ausführungsform der vorliegenden Erfindung Diisocyanate eingesetzt werden.

Grundsätzlich werden zur obengenannten Molekulargewichtserhöhung solche di- oder höherfunktionellen Verbindungen eingesetzt, die zu einer Glasübergangstemperatur des verlängerten Weichsegments (A) führen, die innerhalb des gewünschten Bereichs liegt. In einer bevorzugten Ausführungsform der Erfindung werden daher im genannten Fall Verbindungen zur Molekulargewichtserhöhung bei der Herstellung der Weichsegmente (A) Diisocyanate, insbesondere beispielsweise solche mit 6 bis etwa 30 C-Atomen eingesetzt. Im einzelnen sind beispielsweise zu nennen: lineare aliphatische Diisocyanate wie 1,4-Tetramethylendiisocyanat, 1,5-Pentamethylendiisocyanat oder 1,6-Hexamethylendiisocyanat, aliphatische cyclische Diisocyanate wie 1,4-Cyclohexylendiisocyanat, Dicyclohexylmethandiisocyanat oder Isophorondiisocyanat (IPDI) eingesetzt. Weiterhin im Rahmen der vorliegenden Erfindung als Diisocyanate geeignet sind aromatische Diisocyanate wie Toluylen-2,4-diisocyanat (2,4-TDI), Toluylen-2,6-Diisocyanat (2,6-TDI), das Isomerengemisch der beiden letztgenannten Diisocyanate, m-Tetramethylxylylendiisocyanat (TMXDI), p-Tetramethylxylylendiisocyanat, 1,5-Naphthylendiisocyanat, 1,5-Tetrahydronaphthylendiisocyanat 2,2'-Diphenylmethandiisocyanat, 2,4'-Diphenylmethandiisocyanat und 4,4'-Diphenylmethandiisocyanat (MDI) sowie Gemische aus zwei oder mehr der genannten Diisocyanate. In einer bevorzugten Ausführungsform der Erfindung werden Diisocyanate eingesetzt, die einen aromatischen Molekülbestandteils aufweisen.

Die Weichsegmente (A) können gegebenenfalls eine oder mehrere Ankergruppen L tragen. Die Herstellung von Weichsegmenten (A) mit Ankergruppen L erfolgt nach den üblichen Regeln der organischen Chemie, beispielsweise wie im weiteren Verlauf des Textes im Rahmen der Herstellung der Ankergruppen tragenden Hartsegmente (B) beschrieben. In einer bevorzugten Ausführungsform der vorliegenden Erfindung tragen die thermoplastischen Polyurethane jedoch mehr Ankergruppen im Hartsegment als in den Weichsegmenten. In einer bevorzugten Ausführungsform der Erfindung beträgt das Verhältnis von Ankergruppen in den Hartsegmente zu Ankergruppen in den Weichsegmenten mindestens etwa 5:1, beispielsweise mindestens etwa 10:1. In einer weiteren bevorzugten Ausführungsform der Erfindung weisen die im thermoplastischen Polyurethan enthaltenen Weichsegmente (A) keine Ankergruppen L auf.

Zur Herstellung der Hartsegmente B werden Diisocyanate mit gegenüber Isocyanatgruppen difunktionellen Verbindungen umgesetzt. Die Auswahl von Diisocyanaten und entsprechenden gegenüber Isocyanatgruppen difunktionellen Verbindungen wird dabei derart vorgenommen, daß das entsprechende Hartsegment eine Glasübergangstemperatur wie eingangs definiert aufweist, wobei wiederum die vorstehend bezüglich des Weichsegments genannten Isocyanate bevorzugt werden.

Gegebenenfalls können in untergeordneten Mengen von bis zu etwa 5 Gew.-%, bezogen auf die Gesamtmenge der zur Herstellung des Hartsegments (B) eingesetzten Diisocyanate Isocyanate mit einer Funktionalität von mehr als 2 eingesetzt werden. Zu diesem Zweck geeignete Isocyanate sind beispielsweise die Trimerisierungsprodukte von difunktionellen Isocyanaten wie 1,4-Butylendiisocyanat, 1,5-Pentamethylendiisocyanat oder 1,6-Hexamethylendiisocyanat.

Als difunktionelle- Verbindungen zur Herstellung der Hartsegmente B werden vorzugsweise Verbindungen eingesetzt, die mindestens zwei gegenüber Isocyanaten unter Ausbildung einer kovalenten Bindung reaktionsfähige funktionelle Gruppen aufweisen. Geeignete funktionelle Gruppen sind beispielsweise diejenigen, wie sie bereits oben im Rahmen der Erläuterung der funktionellen Gruppen Y genannt wurden. In einer bevorzugten Ausführungsform der Erfindung werden zur Herstellung der Hartsegmente B difunktionelle Alkohole eingesetzt. Beispielsweise sind dies Diethylenglykol, 1,2-Ethandiol, 1,3-Propandiol, 2-Methyl-1,3-propandiol, 1,4-Butandiol, 1,5-Pentandiol, 1,6-Hexandiol, 1,7-Heptandiol, 1,8-Octandiol, 1,9-Nonandiol, 1,10-Decandiol sowie die entsprechenden höheren Homologen, wie sie sich durch schrittweise Verlängerung der Kohlenstoffkette der genannten Verbindungen bilden lassen sowie beispielsweise 2,2,4-Trimethylpentandiol-1,5, 2,2-Dimethylpropandiol-1,3, 1,4-Dimethylolcyclohexan, 1,4-Diethanolcyclohexan, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol, Methyldiethanolamin oder aromatisch-aliphatische oder aromatisch-cycloaliphatische Diole mit 8 bis etwa 30 C-Atomen, wobei als aromatische Strukturen heterocyclische Ringsysteme oder vorzugsweise isocyclische Ringsysteme wie Naphthalin- oder insbesondere Benzolderivate wie Bisphenol A eingesetzt werden können. In einer bevorzugten Ausführungsform der vorliegenden Erfindung werden zur Herstellung der Hartsegmente B Verbindungen eingesetzt, die ein Molekulargewicht von weniger als etwa 200 g/mol, insbesondere weniger als etwa 150 g/mol aufweisen. Besonders geeignet sind in diesem Zusammenhang die niedermolekularen aliphatische difunktionellen Alkohole, beispielsweise Ethylenglykol, Propylenglykol, Butylenglykol, Neopentylglykol, Neodiol (2-Butyl-2-ethyl-1,3-propandiol) und dergleichen kurzkettige aliphatische, lineare oder verzweigte Verbindungen.

Die Einführung der mindestens einen Ankergruppe L in das Hartsegment (B) kann auf unterschiedliche Weise erfolgen. Zum einen können die Ankergruppen L dadurch eingebaut werden, daß eine Verbindung oder ein Gemisch aus zwei oder mehr Verbindungen, die zur Einführung einer Ankergruppe geeignet sind, im Rahmen einer polymeranalogen Reaktion an entsprechende im Hartsegment (B) enthaltene funktionelle Gruppen kovalent eingebunden werden. Wenn dieser Weg zur Einführung von Ankergruppen (L) beschritten werden soll, ist es erforderlich, daß im Hartsegment (B) beispielsweise freie Hydroxygruppen oder Aminogruppen enthalten sind. Unter Einsatz entsprechender Verbindungen, die zur Reaktion mit den im Hartsegment (B) enthaltenen funktionellen Gruppen geeignet sind und zudem eine funktionelle Gruppen aufweisen, die sich als Ankergruppe (L) eignet, lassen sich so funktionalisierte Hartsegmente (B) erhalten, die je nach Reaktionsführung während der polymeranalogen Reaktion, eine oder mehrerer Ankergruppen (L) aufweisen. Wenn das Hartsegment (B) beispielsweise eine Hydroxygruppe oder zwei oder mehr Hydroxygruppen aufweist, so ist eine Funktionalisierung dieser Hydroxygruppen durch polymeranaloge Reaktion des Hartsegments (B) mit einem Sulton, beispielsweise Propansulton, möglich. In diesem Fall werden als Ankergruppen L Sulfonsäuregruppen eingeführt. Ebenfalls möglich ist beispielsweise die Reaktion von im Hartsegment (B) enthaltenen Hydroxygruppen mit entsprechend funktionalisierten Carbonsäuren, beispielsweise Halogencarbonsäuren wie Chloressigsäure, um eine Funktionalisierung des Hartsegments mit einer oder mehreren entsprechenden Ankergruppen zu erreichen. Weiterhin sind zur Funktionalisierung von im Hartsegment (B) enthaltenen funktionellen Gruppen Carbonsäureanhydride geeignet. Eine entsprechende polymeranaloge Umsetzung von im Hartsegment enthaltenen funktionellen Gruppen, beispielsweise Hydroxygruppen, mit Carbonsäureanhydriden führt zu Hartsegmenten (B), die als Ankergruppe L eine Carbonsäuregruppe aufweisen. Zur Anbindung von entsprechenden Ankergruppen an im Hartsegment (B) enthaltene funktionelle Gruppen sind beispielsweise auch entsprechende Ankergruppen aufweisende Epoxyverbindungen geeignet. Ferner können die Ankergruppen durch Michael-Addition mit geeigneten Gruppen im Polymerrückgrat eingeführt werden.

Vor der polymeranalogen Umsetzung der im Hartsegment (B) enthaltenen funktionellen Gruppen mit einer entsprechenden zur Bildung von Ankergruppen geeigneten Verbindung können die im Hartsegment (B) enthaltenen funktionellen Gruppen beispielsweise mit Alkylenoxiden mit 2 bis 4 C-Atomen umgesetzt werden. In einer bevorzugten Ausfühungsform der Erfindung werden im Hartsegment (B) enthaltene funktionelle Hydroxygruppen mit etwa 1 bis etwa 30 Mol Alkylenoxid, insbesondere Propylenoxid, pro Hydroxygruppe umgesetzt.

Eine weitere Möglichkeit zur Ausstattung der Hartsegmente (B) mit Ankergruppen L besteht darin, daß eine entsprechend mit einer Ankergruppe L funktionalisierte Verbindung bereits beim Aufbau des Hartsegments (B) eingesetzt wird und diese somit bereits während der Synthese des Hartsegments (B) in das Hartsegment (B) eingebaut wird. Entsprechende, mit einer Ankergruppe L funktionalisierte Verbindungen weisen daher mindestens zwei gegenüber einer Isocyanatgruppe unter Ausbildung einer kovalenten Bindung reaktionsfähige funktionelle Gruppen, beispielsweise die bereits genannten funktionellen Gruppen Y auf. Entsprechend geeignete Verbindungen sind beispielsweise Dimethylolpropionsäure oder weitere mit Isocyanaten reaktionsfähige difunktionelle Verbindungen mit einer mit anorganischen Oberflächen, beispielsweise Pigmentoberflächen, wechselwirkenden Gruppe wie -SO3Na, beispielsweise das früher durch die Fa. Goldschmidt vertriebene Tegomer DS3135.

Die Zahl der Ankergruppen L pro Hartsegment (B) kann in weiten Grenzen variieren. Wenn ein erfindungsgemäßes thermoplastisches Polyurethan nur ein Hartsegment (B) aufweist (dargestellt in der allgemeinen Formel I wobei n für die Zahl 1 steht bzw. in der allgemeinen Formel II, wobei n für die Zahl 0 steht), so steht die Zahl m in Formel I, welche die Anzahl der Ankergruppen L im Hartsegment B angibt, für eine Zahl von 1 bis etwa 10. In einer bevorzugten Ausführungsform der Erfindung steht m für 1. Wenn das thermoplastische Polymere mehr als ein Hartsegment (B) aufweist, beispielsweise dargestellt in der allgemeinen Formel I, wobei n für eine Zahl größer als 1 steht, so ist es im rahmen der vorliegenden Erfindung nicht unbedingt erforderlich, daß jedes Hartsegment (B) im thermoplastischen Polymeren eine Ankergruppe L oder zwei oder mehr Ankergruppen L trägt. Es ist lediglich erforderlich, daß mindestens ein Hartsegment im thermoplastischen Polymeren eine Ankergruppe L trägt. Es ist ebenso im Rahmen der vorliegenden Erfindung vorgesehen, daß zwei oder mehr Hartsegmente (B) in einem einzigen thermoplastischen Polymeren eine unterschiedliche Anzahl an Ankergruppen aufweisen. Ein im Rahmen der vorliegenden Erfindung einsetzbares thermoplastisches Polyurethan kann demnach, sofern es zwei oder mehr Hartsegmente (B) aufweist, jeweils Hartsegmente (B) ohne Ankergruppen L, mit einer Ankergruppe L oder mit zwei oder mehr Ankergruppen L aufweisen, wobei mindestens eines der Hartsegmente (B) mindestens eine Ankergruppe L tragen muß. Die Formelschreibweise B(L), wie sie beispielsweise in Formel I und Formel II benutzt wird, ist daher nicht so zu verstehen, daß jedes Hartsegment B eine Ankergruppe L tragen muß. Entscheidend ist lediglich, daß mindestens ein Hartsegment im thermoplastischen Polyurethan mindestens eine Ankergruppe L trägt.

Die Parameter m und r, wie sie in Formel I und II verwendet werden, müssen daher nicht für eine ganze Zahl stehen sondern können Werte annehmen, die das gesamte, innerhalb der Grenzen für r und m liegende Zahlenspektrum umfassen.

Entsprechend den Gegebenheiten bei der Polymersynthese muß der Parameter n ebenfalls nicht notwendigerweise für eine ganze Zahl stehen, da in der Regel bei Polymersynthesen Moleküle mit unterschiedlichen Molekulargewichten entstehen und damit die Zahl n für während der Polymersynthese entstehende Moleküle unterschiedlich sein kann. Der Parameter n drückt daher im vorliegenden Fall die durchschnittliche Zahl der Wiederholungseinheiten in der Gesamtheit der betrachteten Polymermoleküle aus.

In einer bevorzugten Ausführungsform der Erfindung enthält ein Hartsegment (B) die bereits definierten Ankergruppen L.

In einer bevorzugten Ausführungsform der Erfindung weisen die Hartsegmente (B) Glasübergangstemperaturen von mehr als der Gebrauchstemperatur eines aus den erfindungsgemäßen Polyurethanen hergestellten Magnetspeichermediums, beispielsweise etwa 20 °C bis etwa 90 °C auf. In einer weiteren bevorzugten Ausführungsform der Erfindung liegen die Glasübergangstemperaturen der Hartsegmente (B) in einem Bereich von etwa 30 °C bis etwa 80 °C, beispielsweise in einem Bereich von etwa 40 °C bis etwa 70 °C. Um die gewünschten mechanischen Eigenschaften des erfindungsgemäßen thermoplastische Polyurethans zu gewährleisten, sollten die Hartsegmente (B) ein Molekulargewicht von etwa 350 bis etwa 30.000 g/mol aufweisen. In einer bevorzugten Ausführungsform der Erfindung werden Hartsegmente (B) eingesetzt, die ein Molekulargewicht von etwa 1.000 bis etwa 20.000 g/mol, beispielsweise etwa 2.000 bis etwa 15.000 glmol oder etwa 3.000 bis etwa 12.000 g/mol aufweisen.

Die Herstellung der Weichsegmente (A) und der Hartsegmente (B) wird nach den üblichen Regeln der organischen Polymerchemie durchgeführt. Wenn als Weichsegment ein Polyester, ein Polyether, ein Polycarbonat, ein Polyacetal oder eine sonstige als Weichsegment einsetzbare Verbindung eingesetzt wird, so wird deren Herstellung nach üblichen, dem Fachmann bekannten Methoden der Polymerchemie durchgeführt. Sollen verschiedene der genannten, als Weichsegment einsetzbaren Verbindungen miteinander aufgrund eines zu geringen Molekulargewichts der einzelnen Verbindungen verbunden werden, so geschieht dies, in Abhängigkeit von der zur Kettenverlängerung verwendeten difunktionellen Verbindung, ebenfalls nach den üblichen, in der organischen Chemie bekannten Regeln für die jeweiligen funktionellen Gruppen.

Die Herstellung der Weichsegmente (A) wird so durchgeführt, daß ein Weichsegment (A) entsteht das mindestens zwei funktionelle Gruppen Y aufweist, wobei eine Gruppe Y zur Reaktion mit einer Isocyanatgruppe unter Ausbildung einer kovalenten Bindung fähig ist. Geeignete Gruppen Y wurden bereits im Laufe dieses Textes genannt. In einer bevorzugten Ausführungsform der Erfindung werden zur Herstellung der thermoplastischen Polyurethane Weichsegmente (A) eingesetzt, die als funktionelle Gruppen Y OH-Gruppen tragen. Die Zahl der funktionellen Gruppen Y pro Weichsegment sollte mindestens etwa zwei betragen. Es ist jedoch ebensogut mögliche Weichsegmente einzusetzen, deren Funktionalität höher als zwei ist, beispielsweise etwa 3. Es ist weiterhin möglich Gemische aus zwei oder mehr verschiedenen Weichsegmenten (A) einzusetzen, die sich beispielsweise in ihrer Funktionalität gegenüber Isocyanatgruppen unterscheiden. So ist es im Rahmen der vorliegenden Erfindung durchaus möglich, daß die eingesetzten Weichsegmente (A) eine Funktionalität gegenüber Isocyanatgruppen aufweisen die beispielsweise zwischen 2 und 3 liegt, beispielsweise etwa 2,1 bis etwa 2,5.

In einer bevorzugten Ausführungsform der Erfindung werden als Weichsegmente (A) Polyesterpolyole, Polyetherpolyole oder Polycarbonatpolyole eingesetzt, die gegebenenfalls mit Diisocyanaten, beispielsweise Diphenylmethandiisocyanat oder Toluylendiisocyanat bis zum Erreichen eines entsprechenden Molekulargewichts verlängert wurden, eingesetzt.

Die im Rahmen der vorliegenden Erfindung als Hartsegmente (B) eingesetzten Verbindungen werden im Rahmen einer bevorzugten Ausführungsform so hergestellt, daß nach der Herstellung als Hartsegmente einsetzbare Polyurethanpräpolymere mit mindestens zwei Isocyanatgruppen vorliegen. In einer bevorzugten Ausführungsform der Erfindung weisen die als Hartsegmente einsetzbaren Verbindungen mindestens zwei Isocyanatgruppen als endständige Isocyanatgruppen auf.

Die Herstellung der erfindungsgemäßen thermoplastischen Polyurethane erfolgt durch Umsetzung der als Weichsegmente (A) einsetzbaren Verbindungen mit den als Hartsegmente (B) einsetzbaren Verbindungen. Als Weichsegmente (A) einsetzbare Verbindungen weisen im Rahmen der vorliegenden Erfindung einer Struktur Y-A-Y auf, wobei Y die oben angegebene Bedeutung hat und A für eine der oben beschriebenen, als Weichsegment (A) einsetzbaren Strukturen steht. Im Rahmen der vorliegenden Erfindung als Hartsegmente (B) einsetzbare Verbindungen weisen entsprechend eine Struktur OCN-B(L)m-NCO auf, und sind entsprechend gegenüber den die Weichsegmente bildenden Strukturen unter Bildung einer kovalenten Bindung reaktiv. Die angegebenen Strukturen stellen lediglich schematisch den Aufbau der miteinander umzusetzenden Verbindungen dar. Die Zahl der funktionellen Gruppen kann entsprechend dem oben gesagten von der strukturell dargestellten Form abweichen. Wie bereits oben erläutert, müssen nicht alle zur Bildung von Hartsegmenten (B) eingesetzten Verbindungen eine oder mehrere Ankergruppen aufweisen. Es ist lediglich erforderlich eine ausreichende Anzahl an Ankergruppen L tragendem Verbindungen zuzugeben, so daß jedes thermoplastische Polyurethan mindestens ein Hartsegment aufweist, das mindestens eine Ankergruppe L trägt.

Gegenstand der vorliegenden Erfindung ist daher auch ein Verfahren zur Herstellung eines erfindungsgemäßen thermoplastischen Polyurethans, bei dem mindestens ein mindestens difunktionelles lineares oder verzweigtes Polyurethanpräpolymeres mit NCO-Endgruppen, beispielsweise eine Verbindung OCN-B(L)ₘ-NCO, als Hartsegment B mit mindestes einem linearen oder verzweigten, mindestens eine gegenüber NCO-Gruppen reaktive funktionelle Gruppe aufweisenden Weichsegment A, beispielsweise einer Verbindung Y-A-Y, umgesetzt wird.

Die Umsetzung der Verbindungen Y-A-Y und OCN-B(L)ₘ-NCO kann in an sich bekannter Weise vorgenommen werden, vorzugsweise bei Temperaturen von etwa 0 bis etwa 120 °C. Das Verhältnis der beiden Komponenten wird vorteilhafterweise so gewählt, daß das Verhältnis von Y zu NCO-Gruppen etwa 2 bis etwa 1 beträgt. Den üblichen Regeln der Polymerchemie folgend läßt sich durch entsprechende Variationen des genannten Verhältnisses das Molekulargewicht der erhaltenen thermoplastischen Polyurethane in weiten Grenzen steuern.

Mindestens eines der im erfindungsgemäßen Bindemittel vorliegenden thermoplastischen Polyurethane weist ein Molekulargewicht von etwa 3000 bis etwa 150.000, beispielsweise etwa 8.000 bis etwa 100.000 oder etwa 10.000 bis etwa 60.000 auf.

Gegebenenfalls können bei der Umsetzung noch weitere, niedermolekulare Verbindungen vorliegen. Solche Verbindungen können beispielsweise als Kettenverlängerer wirken. Hierzu geeignet sind beispielsweise primäre Aminoverbindungen mit zwei bis etwa 20, beispielsweise 2 bis etwa 12 C-Atomen. Beispielsweise sind dies Ethylamin, n-Propylamin, i-Propylamin, n-Propylamin, sek.-Propylamin, tert.-Butylamin, 1-Aminoisobutan, substituierte Amine mit zwei bis etwa 20 C-Atomen wie 2-(N,N-Dimethylamino)-1-Aminoethan, Aminomercaptane wie 1 -Amino-2-mercaptoethan, aliphatische Aminoalkohole mit 2 bis etwa 20, vorzugsweise 2 bis etwa 12 C-Atomen, beispielsweise Methanolamin, 1-Amino-3,3-dimethyl-pentan-5-ol, 2-Aminohexan-2', 2''-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, aromatisch-aliphatische oder aromatisch-cycloaliphatische Aminoalkohole mit 6 bis etwa 20 C-Atomen, wobei als aromatische Strukturen heterocyclische Ringsysteme oder vorzugsweise isocyclische Ringsysteme wie Naphthalin- oder insbesondere Benzolderivate wie 2-Aminobenzylalkohol, 3-(Hydroxymethyl)-anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen in Betracht kommen.

Die Umsetzung kann gegebenenfalls in Gegenwart eines Katalysators vorgenommen werden. In einer bevorzugten Ausführungsform handelte sich dabei beispielsweise um ein tertiäres Amin wie Triethylamin, Tributylamin, Diazabicyclo(2,2,2)octan, N-Methylpyridin oder N-Methylmorpholin. Weitere geeignete Katalysatoren sind metallorganische Verbindungen wie Dibutylzinndilaurat und Metallsalze wie Zinnoctoat, Bleioctoat oder Zinkstearat. Die während der Reaktionen vorliegende Katalysatormenge beträgt im allgemeinen etwa 1 bis etwa 500 Gew.-ppm.

Die Mitverwendung eines Löse- oder Verdünnungsmittels ist in der Regel nicht erforderlich. Im Rahmen einer bevorzugten Ausführungsform wird jedoch ein Lösemittel oder ein Gemisch aus zwei oder mehr Lösemitteln eingesetzt. Geeignete Lösemittel sind beispielsweise Kohlenwasserstoffe, insbesondere Toluol, Xylol oder Cyclohexan, Ester, insbesondere Ethylglykolacetat, Ethylacetat oder Butylacetat, Amide, insbesondere Dimethylformamid oder N-Methylpyrrolidon, Sulfoxide, insbesondere Dimethylsulfoxid, Ether, insbesondere Diisopropylether oder Methyl-tert.-butylether oder bevorzugt cyclische Ether, insbesondere Tetrahydrofuran oder Dioxan.

Wenn bei der Herstellung der erfindungsgemäßen thermoplastischen Polyurethane die Verbindung Y-A-Y im Überschuß, beispielsweise in der doppelten molaren Menge, zur entsprechenden das Hartsegment bildenden Verbindung eingesetzt wird, so entsteht ein thermoplastisches Polyurethan, das als Endgruppen funktionelle Gruppen Y trägt. Zur Herstellung von thermoplastischen Polyurethanen gemäß der allgemeinen Formel II können diese, gegenüber Isocyanatgruppen reaktive Endgruppen enthaltenden Verbindungen mit gegenüber solchen Gruppen difunktionellen Verbindungen unter Kettenverlängerung umgesetzt werden. Entsprechende difunktionelle Verbindungen der allgemeinen Formel X-Z-X weisen als funktionelle Gruppen X gegenüber den funktionellen Gruppen Y reaktive Gruppen auf. Beispiele solche funktionelle Gruppen X sind in erster Linie die Isocyanatgruppen, die im Rahmen einer bevorzugten Ausführungsform der vorliegenden Erfindung eingesetzt werden. Je nach Art der funktionellen Gruppe Y kann X jedoch auch für andere gegenüber Y reaktive funktionelle Gruppen stehen, beispielsweise für Epoxygruppen, Carbonsäuregruppen, Carbonsäureestergruppen, Carbonsäureanhydride oder für Doppelbindungen, die im Rahmen einer Michael-Addition mit Y umgesetzt werden können.

In einer bevorzugten Ausführungsform der Erfindung weist Z als funktionelle Gruppen X mindestens zwei Epoxy-, OH-, NCO- oder COOH-Gruppen oder ein untereinander nicht reaktives Gemisch aus zwei oder mehr davon auf.

Ebenfalls Gegenstand der Erfindung ist ein Bindemittel, mindestens enthaltend ein erfindungsgemäßes thermoplastisches Polyurethan.

Das erfindungsgemäße Bindemittel enthält mindestens ein thermoplastisches Polyurethan das mindestens ein Hartsegment (B) aufweist, wobei mindestens eines der Hartsegmente (B) mindestens eine Ankergruppe L trägt. In einer bevorzugten Ausführungsform der vorliegenden Erfindung enthält das erfindungsgemäße-Bindemittel ein solches thermoplastisches Polyurethan oder ein Gemisch aus zwei oder mehr solcher thermoplastischen Polyurethane in einer Menge von mindestens etwa 10 Gew.-%, beispielsweise mindestens etwa 30 oder 50 Gew.-%. In einer bevorzugten Ausführungsform der Erfindung beträgt der Gehalt des Bindemittels an erfindungsgemäßem Polyurethan etwa 50 ± 5 Gew.-%, wobei der Rest aus herkömmlichen zur Verwendung in Bindemitteln geeigneten Polymeren, beispielsweise Polyurethanen, bestehen kann. Neben den genannten thermoplastischen Polyurethanen, die in mindestens einem Hartsegment (B) eine Ankergruppe L tragen, kann das erfindungsgemäße Bindemittel noch ein weiteres thermoplastisches Polyurethan oder ein Gemisch aus zwei oder mehr weiteren thermoplastischen Polyurethanen enthalten. Im Rahmen einer weiteren bevorzugten Ausführungsform der vorliegenden Erfindung enthalten die erfindungsgemäßen Bindemittel neben dem bereits genannten thermoplastischen Polyurethan oder den bereits genannten thermoplastischen Polyurethanen noch mindestens ein weiteres Bindemittel.

Als weiteres im erfindungsgemäßen Bindemittel vorliegendes Polymeres eignet sich ein thermoplastisches Polyurethan der allgemeinen Formel III

Y-(A-B-A)ₙ-Y (III)

oder ein Polyurethan der allgemeinen Formel IV

Y-(A-B-A-Z-)ₙ-A-B-A-Y (IV),

oder ein Gemisch aus zwei oder mehr davon, wobei A und B die oben genannte Bedeutung haben, Z für den Rest einer gegenüber Y unter Ausbildung einer kovalenten Bindung mindestens difunktionelle Verbindung X-Z-X, Y für eine gegenüber den funktionellen Gruppen X der Verbindung Z unter Ausbildung einer kovalenten Bindung reaktive funktionelle Gruppe, X für mindestens eine gegenüber den funktionellen Gruppen Y unter Ausbildung einer kovalenten Bindung reaktive funktionelle Gruppe und n für eine Zahl von 1 bis 10 steht.

Die weiteren thermoplastischen Polyurethane gemäß Formel III und Formel IV weisen im wesentlichen eine zu den thermoplastischen Polyurethanen gemäß Formel I und Formel II identische Struktur und einen entsprechend identischen Aufbau auf. Die thermoplastischen Polyurethane gemäß Formel III und Formel IV unterscheiden sich von den thermoplastischen Polyurethanen gemäß Formel I und Formel II lediglich dahingehend, daß die Hartsegmente (B) keine Ankergruppen L tragen. Die Herstellung der thermoplastischen Polyurethane gemäß Formel III und Formel IV verläuft daher entsprechend zu der Herstellung der thermoplastischen Polyurethane gemäß Formel I und Formel II mit dem Unterschied, daß bei der Herstellung keine Verbindungen eingesetzt werden, die eine Ankergruppe L in eines der in den thermoplastischen Polyurethanen gemäß Formel III oder gemäß Formel IV enthaltenen Hartsegmente einführen. Für die thermoplastischen Polyurethane gemäß Formel III und Formel IV gelten im wesentlichen die gleichen Molekulargewichtsgrenzen für die Weichsegmente (A) und Hartsegmente (B), wie sie bereits für die thermoplastischen Polyurethane gemäß Formel I und Formel II dargestellt wurden. Ebenso werden im Rahmen einer bevorzugten Ausführungsform der vorliegenden Erfindung solche thermoplastischen Polyurethane gemäß Formel III oder Formel IV im erfindungsgemäßen Bindemittel eingesetzt, deren Weichsegmente (A) und Hartsegmente (B) Glasübergangstemperaturen aufweisen, die im wesentlichen innerhalb der für die thermoplastischen Polyurethane gemäß Formel I oder Formel II genannten Grenzen liegen.

Wenn das erfindungsgemäße Bindemittel ein thermoplastisches Polyurethan gemäß Formel I oder ein Gemisch aus zwei oder mehr thermoplastischen Polyurethanen gemäß Formel I oder ein thermoplastisches Polyurethan gemäß Formel II oder ein Gemisch aus zwei oder mehr thermoplastischen Polyurethanen gemäß Formel II oder ein Gemisch aus einem oder mehreren thermoplastischen Polyurethanen gemäß Formel I und einem oder mehreren thermoplastischen Polyurethanen gemäß Formel II und ein thermoplastisches Polyurethan gemäß Formel III oder ein Gemisch aus zwei oder mehr thermoplastischen Polyurethanen gemäß Formel III oder ein thermoplastisches Polyurethan gemäß Formel IV oder ein Gemisch aus zwei oder mehr thermoplastischen Polyurethanen gemäß Formel IV oder ein Gemisch aus einem oder mehreren thermoplastischen Polyurethanen gemäß Formel I und einem oder mehreren thermoplastischen Polyurethanen gemäß Formel II und einem oder mehreren thermoplastischen Polyurethanen gemäß Formel II und einem oder mehreren thermoplastischen Polyurethanen gemäß Formel IV enthält, dann wird in einer bevorzugten Ausführungsform das Verhältnis von Ankergruppen L tragenden thermoplastischen Polyurethanen zu thermoplastischen Polyurethanen ohne Ankergruppen so gewählt, daß die Zahl der Ankergruppen L, bezogen auf die Gesamtzahl der Hartsegmente (B) im gesamten Bindemittel etwa 0,1 bis etwa 3 beträgt.

Die erfindungsgemäßen Bindemittel können neben den genannten thermoplastischen Polyurethanen gemäß Formel I oder Formel II oder Formel III oder Formel IV oder deren Gemischen noch ein weiteres Polymeres oder ein Gemisch aus zwei oder mehr weiteren Polymeren enthalten. Zu den weiteren im Rahmen des erfindungsgemäßen Bindemittels einsetzbaren Polymeren zählen beispielsweise nicht thermoplastische Polyurethane, Polyacrylate, Polyesterpolyurethane, Poly(meth)acrylaturethane, Polymethacrylate, Polyacrylamide, Polymere oder Copolymere aus Vinylmonomeren wie Styrol, Vinylchlorid, Vinylacetat, Vinylpropionat, Bindemittel auf Basis von Vinylformalen, cellulosehaltige Polymere wie Celluloseester, insbesondere Cellulosenitrate, Celluloseacetate, Celluloseacetopropionat oder Celluloseacetobutyrat, Phenoxyharze oder Epoxyharze, wie sie in an sich bekannter Weise erhalten werden können, oder Gemische aus zwei oder mehr davon.

Die erfindungsgemäßen Bindemittel enthalten die thermoplastischen Polyurethane in der Regel in einer Menge von bis zu etwa 100 Gew.-%. Weitere Bindemittel können in einem Anteil von bis zu etwa 80 Gew.-%, beispielsweise bis zu etwa 70, 60, 50, 40 oder 30 Gew.-%, oder darunter, im erfindungsgemäßen Bindemittel enthalten sein.

Die erfindungsgemäßen Polyurethane sind sowohl als Dispergierbindemittel als auch als Auflackbindemittel einsetzbar. Wenn ein erfindungsgemäßes Polyurethan als Dispergierbindemittel eingesetzt werden soll, so sollte die Zahl der Ankergruppen pro Hartsegment im Polymeren mindestens etwa 1, insbesondere etwa 1 bis etwa 3 betragen. Wenn ein erfindungsgemäßes Polyurethan als Auflackbindemittel eingesetzt werden soll, so sollte die Zahl der Ankergruppen pro Hartsegment im Polymeren etwa 0,1 bis etwa 0,9, insbesondere etwa 0,2 bis etwa 0,6, betragen. Entsprechendes gilt, wenn Gemische aus zwei oder mehr Polymeren zur Herstellung der Dispergier- oder Auflackbindemittel eingesetzt werden. In diesem Fall sollte das Verhältnis von Hartsegmenten mit Ankergruppen zu Hartsegmenten ohne Ankergruppen so eingestellt werden, daß die oben genannten Werte eingehalten werden.

Zum Einsatz als Dispergierbindemittel geeignete erfindungsgemäße Polymere weisen im Rahmen einer bevorzugten Ausführungsform der Erfindung eine Glasübergangstemperatur (T_{g}) von etwa 55 bis etwa 65 °C und ein Molekulargewicht von etwa 10.000 bis etwa 25.000 auf. Zum Einsatz als Auflackbindemittel geeignete erfindungsgemäße Polymere weisen im Rahmen einer bevorzugten Ausführungsform der Erfindung eine Glasübergangstemperatur (T_{g}) von etwa 12 bis etwa 30 °C und ein Molekulargewicht von etwa 40.000 bis etwa 80.000 auf.

Im Rahmen einer bevorzugten Ausführungsform der Erfindung enthalten die erfindungsgemäßen Bindemittel ein magnetisches Pigment oder ein Gemisch aus zwei oder mehr magnetischen Pigmenten. Als magnetische Pigmente kommen die üblichen oxidischen Pigmente wie γ-Fe₂O₃, γ-Fe₃O₄, CrO₂, Co-modifiziertes Fe₂O₃ oder metallische Pigmente wie Fe, Co und Ni in Betracht. Diesen Pigmenten können, wie allgemein üblich, weitere Elemente oder Verbindungen beigemischt sein.

Darüber hinaus können die erfindungsgemäßen Bindemittel noch Füllstoffe, Dispergierhilfsmittel, weitere Zusatzstoffe wie Gleitmittel, Ruß oder nichtmagnetische anorganische oder organische Pigmente enthalten.

Zur Herstellung der erfindungsgemäßen Magnetdispersionen können daher ein thermoplastisches Polyurethan oder ein Gemisch aus zwei oder mehr der obengenannten thermoplastischen Polyurethane mit einem magnetischen Pigment oder einem Gemisch aus zwei oder mehr magnetischen Pigmenten, beispielsweise in Abmischung mit einem oder mehreren Lösemitteln und gegebenenfalls zusammen mit Füllstoffen, Dispergierhilfsmitteln, weiteren Bindemitteln und weiteren Zusatzstoffe wie Gleitmitteln, Ruß oder nichtmagnetischen anorganischen oder organischen Pigmenten zusammen dispergiert werden. In einer bevorzugten Ausführungsform werden die Hauptkomponenten in der Magnetdispersion, also insbesondere die Pigmente und das Bindemittel zunächst unter Zusatz von wenig Lösungsmittel zur einer teigartigen Masse vermengt und anschließend innig miteinander, z. B. durch Kneten, vermischt und erst anschließend dispergiert

Als Gleitmittel können beispielsweise Carbonsäuren mit etwa 10 bis etwa 20 C-Atomen, insbesondere Stearinsäure oder Palmitinsäure oder Derivate von Carbonsäuren wie deren Salze, Ester oder Amide, oder Gemische aus zwei oder mehr davon, eingesetzt werden.

Als nichtmagnetische anorganische Zusatzstoffe kommen beispielsweise Aluminiumoxyd, Siliziumdioxid, Titandioxid oder Zirkondioxid, als nichtmagnetische organische Pigmente beispielsweise Polyethylen oder Polypropylen in Betracht.

Die erfindungsgemäßen Bindemittel können im Rahmen ihrer Verwendung als magnetische Aufzeichnungsmedien beispielsweise auf übliche starre oder flexible Trägermaterialien aufgetragen werden. Als Trägermaterialien eigentlich beispielsweise Folien aus linearen Polyestern wie Polyethylenterephthalat oder Polyethylennaphthalat, die im allgemeinen Stärken von etwa 4 bis etwa 200 Mikrometer, insbesondere etwa 5 bis etwa 36 Mikrometer aufweisen.

Gegenstand der Erfindung ist daher auch ein Formkörper, insbesondere ein selbsttragender Formkörper, mindestens enthaltend ein erfindungsgemäßes Bindemittel oder ein nach einem erfindungsgemäßen Verfahre hergestelltes Bindemittel.

Ebenfalls Gegenstand der Erfindung ist die Verwendung eines erfindungsgemäßen Bindemittels oder eines erfindungsgemäß hergestellten Bindemittels zur Herstellung magnetischer Aufzeichnungsmedien. Als Aufzeichnungsmedien sind insbesondere zu nennen:
Videokassetten, sowohl für den Profi- und Endverbraucherbereich; Audiokassetten, sowohl für den Profi- und Endverbraucherbereich, z. B. Digital Audio Tape; Disketten; Floppy Disk; ZIP-Disk; Magnetstreifen.

Die Erfindung wird nachfolgend durch Beispiele näher erläutert.

### BEISPIELE:

### Beispiel 1

### Monoschichtband

Eine Mischung aus 100 Gew.-Teilen eines ferromagnetischen Metallpigments (H_{c} = 117 kA/m; SSA = 51 m²/g; durchschnittliche Partikellänge 170 nm, mittlerer Partikeldurchmesser 25 nm), 10 Gew.-Teilen α-Aluminiumoxid (durchschnittlicher Partikeldurchmesser 320 nm), 2 Gew.-Teilen Ruß (BET = 35 m2/g; Primärteilchengröße = 50 nm), 9 Gew.-Teilen des erfindungsgemäßen Polymeren, 9 Gewichtsteilen eines handelsüblichen Polyurethans mit Sulfonatankergruppen (Firma Morton), 2,5 Gew.-Teilen Stearinsäure, 15 Gew.-Teilen Tetrahydrofuran und 15 Gew.-Teilen Dioxan wurden in einem Batch-Kneter (IKA Hochleistungskneter Typ HKD 10, Firma IKA-Maschinenbau, Staufen) 2 Stunden geknetet.

Die Knetmasse wurde anschließend portionsweise in einem Dissolver unter starkem Rühren mit einem Gemisch aus 145 Gew.-Teilen THF und 145 Gew.-Teilen Dioxan versetzt und dann 9 Stunden mit einer Rührwerksmühle dispergiert. Zu der Dispersion wurden anschließend unter starkem Rühren 1 Gew.-Teil Butylstearat, 5,2 Gew.-Teile einer 50 gew.-%igen Lösung des Umsetzungsprodukts von 3 Mol Toluylendiisocyanat mit 1 Mol Trimethylolpropan in THF sowie portionsweise ein Gemisch aus 40 Gew.-Teilen THF und 40 Gew.-Teilen Dioxan gegeben. Nach Filtration durch ein Filter mit einer Porenweite von 2 µm wurde eine homogene, feinteilige, absetzstabile und flokkulatfreie beschichtungsfähige Dispersion erhalten.

Die Dispersion wurde auf eine rückbeschichtete Polyethylenterephtalat-Folie mit einer Trockenschichtdicke von 3 µm aufgetragen. Vor dem Trocknen wurde die beschichtete Bahn zur Ausrichtung der ferromagnetischen Pigmente durch eine Richtstrecke, bestehend aus einer Spule mit einer Feldstärke von 200 kA/m, hindurchgeführt. Nach dem Trocknen bei 80 °C wurde die Folienbahn in einem Stahl/Stahl-Kalander mit 6 Spalten bei 85 °C und einem Druck von 200 kg/cm satiniert und anschließend in 1/2 Zoll breite Videobänder geschnitten.

### Vergleichsbeispiel

Es wurde wie in oben beschrieben verfahren, jedoch wurde das erfindungsgemäße Polyurethan gewichtsmäßig durch ein handelsübliches VC-Copolymer mit Sulfonatankergruppen (Firma Nippon Zeon) ersetzt.

Die erhaltenen Meßergebnisse zeigt die Tabelle 1.

**Tabelle 1**

| | **Beispiel** | **Vergleichsbeispiel** |
|---|---|---|
| Dauer Kneten + Dispergieren (Std) | 2 + 9 | 2 + 13 |
| Glanz 1 | 140 | 115 |
| Glanz 2 | 138 | 105 |
| Oberflächenfehler | keine | keine |
| HF-Pegel (dB) | +2,3 | +0,5 |
| S/N (dB) | +1,6 | +0,1 |
| Abrieb am Videokopf (Note) | 1,5 | 3 |
| Reibungskoeffizient RAF-Test | 0,21 | 0,29 |

Die Meßwerte (Tabelle 1) bedeuten:

### Glanzmessung:

Es wird die Reflektion im 60° Winkel an der unkalandrierten Schicht gemessen.
Glanz 1: Glanzwert unmittelbar nach Ende der Dispergierung
Glanz 2: Glanzwert nach 24 Stunden Rollbrett

Die Pigmentaufteilung ist umso besser, je höher der Glanzwert liegt.

### HF-Pegel:

Der Hochfrequenzpegel wurde in einem Betacam SP-Rekorder (System BVW 75, Firma Sony) gegen das Referenzband Sony RSB 01 SP gemessen. Das Band ist umso besser, je höher der HF-Pegel ist.

### S/N (Luminanz):

Das Luminanz-Signal wurde in einem Betacam SP-Rekorder (System BVW 75, Firma Sony) gegen das Referenzband Sony RSB 01 SP gemessen. Das Band ist umso besser, je höher der S/N-Wert ist.

### Reibungskoeffizient:

Der Reibungskoeffizient im RAF-Test wurde bei einer Probenlänge von 150 mm bei einer Meßstrecke von 100 mm bestimmt. Nach 15-minütiger Klimatisierung bei 40 °C und 80% relativer Feuchte wurde das Bandstück auf eine Länge von 100 mm mit einer Kraft von 2 N und einer Geschwindigkeit von 20 mm/s über einen Stahlstift (Durchmesser 2,5 mm, Umschlingung 90 °) hin- und hergezogen. Gemessen wurde der Reibungskoeffizient nach 100 Zyklen im o.g. Klima. Das Band ist in seinen Laufeigenschaften umso besser, je kleiner der Wert ist.

### Beispiel 2

### Doppelschichtband

### a) Oberschicht

Eine Mischung aus 100 Gew.- Teilen eines ferromagnetischen Metallpigments (Hc = 180 kA/m; SSA = 58 m²/g; durchschnittliche Partikellänge 80 nm; durchschnittlicher Partikeldurchmesser 25 nm), 13 Gew.-Teilen α-Aluminiumoxid (durchschnittlicher Partikeldurchmesser 220 nm), 8,2 Gew.-Teilen des erfindungsgemäßen Polymeren, 3,5 Gew.-Teilen eines handelsüblichen Polyurethans mit polaren Ankergruppen (Firma Morton), 2 Gew.-Teilen Stearinsäure, 1 Gew.-Teil Myristinsäure, 15 Gew.-Teilen Tetrahydrofuran und 15 Gew.-Teilen Dioxan wurde in einem Batch-Kneter (IKA Hochleistungskneter Typ HKD 10, Firma IKA Maschinenbau, Staufen) 2 Stunden geknetet.

Die Knetmasse wurde anschließend portionsweise in einem Dissolver unter starkem Rühren mit einem Gemisch aus 155 Gew.-Teilen Tetrahydrofuran und 155 Gew.-Teilen Dioxan versetzt und dann 10 Stunden mit einer Rührwerksmühle dispergiert. Zu der Dispersion wurden anschließend unter starkem Rühren 1 Gew.-Teil Butylstearat, 4 Gew.-Teile einer 50%-igen Lösung des Umsetzungsprodukts von 3 Mol Toluylendiisocyanat mit 1 Mol Trimethylolpropan in Tetrahydrofuran, sowie portionsweise ein Gemisch aus 44 Gew.-Teilen Tetrahydrofuran und 44 Gew.-Teilen Dioxan gegeben. Nach Filtration durch ein Filter mit einer Porenweite von 2 µm wurde eine homogene, feinteilige, absetzstabile und flokkulatfreie beschichtungsfertige Dispersion für die Oberschicht erhalten.

### Vergleichsbeispiel 2 a)

Es wurde wie oben beschrieben verfahren, jedoch wurde das erfindungsgemäße Polyurethan durch ein handelsübliches VC-Copolymer mit Sulfonatankergruppen ersetzt(Firma Nippon Zeon).

### b) Unterschicht

Eine Mischung aus 100 Gew.-Teilen α-Eisenoxid (durchschnittliche Partikellänge 118 nm, durchschnittlicher Partikeldurchmesser 28 nm, SSA = 60 m²/g; Firma Toda), 29 Gew.-Teilen Ruß (durchschnittliche Primärteilchengröße 25 nm, SSA = 112 m²/g), 13 Gew.-Teile des erfindungsgemäßen Polymeren, 7,5 Gew.-Teile eines handelsübliche Polyurethans mit polaren Ankergruppen (Tg = 70 °C; Firma Morton), 7,5 Gew.-Teile eines zweiten handelsüblichen Polyurethans mit polaren Ankergruppen (Tg = 35 °C; Firma Morton), 2 Gew.-Teilen Stearinsäure, 27 Gew.-Teilen Tetrahydrofuran und 27 Gew.-Teilen Dioxan wurden in einem Batch-Kneter 3 Stunden geknetet. Die Knetmasse wurde anschließend in einem Dissolver unter starkem Rühren portionsweise mit einem Gemisch aus 234 Gew.-Teilen Tetrahydrofuran und 234 Gew.-Teilen Dioxan versetzt und dann 15 Stunden in einer Rührwerksmühle dispergiert. Zu der Dispersion wurden anschließend unter starkem Rühren 6,3 Gew.-Teile einer 50%-igen Lösung des Umsetzungsprodukts von 3 Mol Toluylendiisocyanat mit 1 Mol Trimethylolpropan in Tetrahydrofuran gegeben. Nach Filtration durch ein Filter mit einer Porenweite von 2 µm wurde eine homogene, feinteilige, absetzstabile und flokkulatfreie beschichtungsfertige Dispersion erhalten.

### Vergleichsbeispiel 2b)

Es wurde wie oben beschrieben verfahren, jedoch wurde das erfindungsgemäße Polymer durch ein handelsübliches VC-Copolymer mit Sulfonatankergruppen ersetzt (Firma Nippon Zeon).

### Auftragen von Unter- und Oberschicht

Die Dispersionen wurden auf die Vorderseite einer rückbeschichteten Polyethylenterephtalat-Folie naß-in-naß aufgetragen. Vor dem Trocknen wurde die beschichtete Folie zur Ausrichtung der ferromagnetischen Pigmente durch eine Richtstrecke, bestehend aus einer Spule mit einer Feldstärke von 200 kA/m, hindurchgeführt. Nach dem trocknen bei 80 °C wurde die Folienbahn mit einem Stahl/Stahl-Kalander mit 6 Spalten bei 80 °C und einem Druck von 200 kg/cm satiniert und anschließend in 6,35 mm breite Videobänder geschnitten.

Die erhaltenen Meßergebnisse sind in Tabelle 2 aufgeführt.

**Tabelle 2**

| | **Beispiel** | **Vergleichsbeispiel** |
|---|---|---|
| Schichtdicke Oberschicht (µm) | 0,25 | 0,27 |
| Schichtdicke Unterschicht (µm) | 1,30 | 1,32 |
| Glanz 1 (Oberschicht) | 165 | 156 |
| Glanz 2 (Oberschicht) | 163 | 153 |
| Glanz 1 (Unterschicht) | 148 | 139 |
| Glanz 2 (Unterschicht) | 148 | 137 |
| Oberflächenfehler | Keine | keine |
| HF-Pegel (dB) | +1,5 | +0,3 |
| Abrieb am Videokopf | 2 | 3,5 |
| Reibungskoeffizient RAF-Test | 0,17 | 0,25 |

Glanz-, Abrieb- und Reibungsmessungen wurden wie in Beispiel 1 beschrieben durchgeführt.

Der Hochfrequenzpegel wurde in einem DVC - MAZ-Gerät (AJ D-750, Firma Panasonic) gegen das Referenzband Panasonic APOG 0715-15 gemessen.

Ein Vergleich der Meßergebnisse zeigt, daß die erfindungsgemäßen Magnetbänder bedingt durch bessere Pigmentaufteilung in Ober- und Unterschicht verbesserte Pegelwerte aufweisen. Außerdem wird durch die sehr niedrigen Reibwerte ein gutes Lauf- und Abriebverhalten im Rekorder erzielt.

Folgende Beispiele zeigen die Verwendung der beschriebenen Bindemittel in magnetischen Speichermedien:

### Beispiel 1

Es wurde eine magnetische Dispersion folgender Zusammensetzung hergestellt:

| | |
|---|---|
| Magnetisches Pigment (nadelförmiges cobalthaltiges Eisenpulver; Nadellänge 150 nm; ph=9,5; BET-Oberfläche: 55 m²/g; Hc: 132 kA/m; Sättigungsmagnetisierung: 126,6 emu/g) | 100 Gew.-Teile |
| Anorganisches Stützpigment (α-Aluminiumoxid; pH=8,5; BET-Oberfläche: 6 m²/g; Primärkorngröße: 0,3 µm) | 10 Gew.-Teile |
| Ruß (Primärkorngröße: 60 nm; pH=8,0; DBPA-Adsorption: 65 cm³/100 g) | 1 Gew.-Teil |
| Bindemittel A, wie oben beschrieben | 10 Gew.-Teile |
| Bindemittel B (Polyesterpolyurethan; T_{g} = 50°C; 50 meq NaSO3- / kg) | 10 Gew.-Teile |
| Stearinsäure | 1 Gew.- Teil |
| Butylstearat | 1 Gew.- Teil |
| Tetrahydrofuran | 230 Gew.-Teile |
| Dioxan | 230 Gew.-Teile |

Die Dispersion wurde in der üblichen Weise hergestellt, wobei die Mahlung in einer liegenden Rühnverkskugelmühle erfolgte. Bindemittel B und Gleitmittel wurden erst zugegeben, nachdem ein Glanzniveau von 120 (60°) erreicht worden war. Anschließend wurde über ein Filter mit Porengröße 2 µm filtriert.

Vor der Beschichtung wurden 6 Gew.-Teile einer 50%igen Vernetzerlösung eingerührt (2,6-funktionelles Isocyanat auf TMP-/TDI-Basis). Die Beschichtung erfolgte mittels eines Messergießers auf eine 14 µm dicke PET-Folie, die zuvor mit einer Rückseitenbeschichtung versehen worden war. Magnetschichtdicke: 2,5 µm. Nach der Kalanderung (2 Stahl/Stahl- und 3 PU/Stahlwalzen; 60°C; 200 kp / cm) wurde der beschichtete Block 3 Tage bei 60 °C gelagert.

Das Material wurde in Bänder von 1/2 Zoll Breite aufgetrennt, diese wurden dann nach Reinigung über Vlies und Klinge in Magstar-Cassetten eingespult.

### Vergleichsbeispiel:

Wie Beispiel 1, jedoch unter Verwendung von Bindemittel C, wie oben beschrieben, anstelle von Bindemittel A. Erreichter Glanzwert: 110 (60°).

### Durability-Test

Je 2 Cassetten wurden 2 Tage bei 31°C und 85% rel. Luftfeuchte gelagert und anschließend in einem IBM 3590 - Laufwerk im selben Klima einem achtstündigen Dauerlauftest unterzogen ( 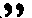 Locate-Rewind-Prüfung").

| | **Dropouts (%)** | | **temporäre Fehler** | | **Permanente Fehler** | |
|---|---|---|---|---|---|---|
| | **vorher** | **nachher** | **vorher** | **nachher** | **Vorher** | **Nachher** |
| Beispiel 1 | | | | | | |
| Cassette 1 | 5 | 6 | 0 | 0 | 0 | 0 |
| Cassette 2 | 7 | 5 | 0 | 0 | 0 | 0 |

| **Vergleichs- Beispiel** | | | | | | |
|---|---|---|---|---|---|---|
| Cassette 1 | 6 | 20 | 0 | 3 | 0 | 1 |
| Cassette 2 | 8 | 30 | 0 | 4 | 0 | 1 |

Die Cassetten des Vergleichsbeispiels zeigten eine deutliche Fehlerzunahme; die Widerstandsfähigkeit der Schicht war nicht ausreichend.

### Bindemittel - Synthesebeispiel

### 1) Labormaßstab

### Weichsegment:

278 g Lupraphen ACI 800 (Polyester aus Adipinsäure, Cyclohexandimethanol und Isophthalsäure, Molekulargewicht 800 g/mol) werden zusammen mit 63 g Methylendiisocyanat in 800 g Tetrahydrofuran vorgelegt. Nach Zugabe von 4 Tropfen Dibutylzinndilaurat wird der Ansatz so lange auf 60 °C erhitzt, bis keine Isocyanatgruppen mehr nachgewiesen werden können.

### Hartsegment:

27 g Neopentylglykol und 56 g Tegomer DS 3135® (Fa. Goldschmidt) werden in 390 g Tetrahydrofuran vorgelegt, mit 4 Tropfen Dibutylzinndilaurat und anschließend mit 85 g Methylendiisocyanat versetzt. Der Ansatz wird auf 50 °C erhitzt bis der Isocyanatgehalt auf 0,62 % gefallen ist.

### Bindemittel:

Das in Tetrahydrofuran gelöste Weich- und Hartsegment werden auf 65 °C erhitzt bis keine Isocyanatgruppen mehr nachgewiesen werden können.

### 2) 1t-Kessel

### Weichsegment:

108 kg Lupraphen ACI 800 werden zusammen mit 25 kg Methylendiisocyanat und 20 g Dibutylzinndilaurat in 531 kg Tetrahydrofuran gelöst. Der Ansatz wird auf 60 °C erhitzt, bis keine Isocyanatgruppen mehr nachgewiesen werden können. (Zulauf 1)

### Hartsegment:

10,5 kg Neopentylglykol, 22,5 kg Tegomer DS 3135® (Fa. Goldschmidt), 34 kg Methylendiisocyanat und 50 g Dibutylzinndilaurat werden in 267 kg Tetrahydrofuran gelöst. Der Ansatz wird auf 60 °C erhitzt bis der Isocyanatgehalt auf 0,42 % gefallen ist.

### Bindemittel:

Zulauf 1 wird innerhalb von wenigen Minuten zum Hartsegment zugegeben und auf 60 °C erhitzt bis der Isocyanatgehalt auf 0 % gefallen ist.
Molekulargewicht (Gewichtsmittel): 18.000 bis 20.000 g/mol
Polydispersität: 3,5 bis 4,5
Glasübergangstemperatur: 62 bis 66 °C
Viskosität: um 150 mPas
Speichermodul E*'* (20 °C): 14 bis 15 Gpa
Speichermodul E*'* (50°C): 13 bis 14 GPa

## Patentansprüche

1. Thermoplastisches blockcopolymeres Polyurethan mit mindestens einem Weichsegment A und mindestens einem Hartsegment B, wobei mindestens ein Hartsegment B im thermoplastischen blockcopolymeren Polyurethan mindestens eine anionische oder mindestens eine kationische oder mindestens eine nichtionische Ankergruppe L oder ein Gemisch aus zwei oder mehr solcher Ankergruppen aufweist.

2. Polyurethan nach Anspruch 1, dadurch gekennzeichnet, daß es eine Struktur gemäß der allgemeinen Formel I
Y-(A-B(L)ₘ-A-)ₙY (I)
oder der allgemeinen Formel II
Y-(A-B(L)ᵣ-A-Z-)ₙ-A-B(L)ₘ-A-Y (II),
aufweist, wobei A, B und L die oben genannte Bedeutung haben Z für den Rest einer gegenüber Y unter Ausbildung einer kovalenten Bindung mindestens difunktionelle Verbindung X-Z-X, Y für eine gegenüber den funktionellen Gruppen X der Verbindung Z unter Ausbildung einer kovalenten Bindung reaktive funktionelle Gruppe, X für mindestens eine gegenüber den funktionellen Gruppen Y unter Ausbildung einer kovalenten Bindung reaktive funktionelle Gruppe, n für eine Zahl von 1 bis 10, m für eine Zahl von 1 bis 10 und r für eine Zahl von 0 bis 10 steht, wobei die Zahl der Ankergruppen L im gesamten Blockcopolyurethan 1 bis n*m+1 (Formel I) bzw. 1 bis n*r+m (Formel II) beträgt.

3. Polyurethan nach Anspruch 1 oder 2, dadurch gekennzeichnet, daß Y für OH, NH₂, NHR, SH oder COOH steht, wobei R für einen linearen oder verzweigten, gesättigten oder ungesättigten Alkylrest mit 1 bis 24 C-Atomen oder einen Arylrest mit 6 bis 24 C-Atomen steht.

4. Polyurethan nach einem der Ansprüche 1 bis 3, dadurch gekennzeichnet, daß es als Ankergruppe L eine Carboxylgruppe, eine Sulfonsäuregruppe, eine Phosphonsäuregruppe oder ein geeignetes Salz einer solchen Gruppe oder eine quaternäre Aminogruppe, oder Derivate, ein primäres, sekundäres oder tert. Amin oder zwei oder mehr der jeweils genannten Ankergruppen oder ein Gemisch aus zwei oder mehr der genannten Ankergruppen enthält.

5. Bindemittel, mindestens enthaltend ein thermoplastisches Polyurethan nach einem der Ansprüche 1 bis 4.

6. Bindemittel nach Anspruch 5, dadurch gekennzeichnet, daß es als thermoplastisches Polyurethan ein Polyurethan der allgemeinen Formel I
Y-(A-B(L)ₘ-A-)ₙY (I)
oder ein Polyurethan der allgemeinen Formel II
Y-(A-B(L)ₘ-A-Z-)ₙ-A-B(L)-A-Y (II),
oder ein Gemisch aus zwei oder mehr davon enthält, wobei A, B und L die oben genannte Bedeutung haben Z für den Rest einer gegenüber Y unter Ausbildung einer kovalenten Bindung mindestens difunktionelle Verbindung X-Z-X, Y für eine gegenüber den funktionellen Gruppen X der Verbindung Z unter Ausbildung einer kovalenten Bindung reaktive funktionelle Gruppe, X für mindestens eine gegenüber den funktionellen Gruppen Y unter Ausbildung einer kovalenten Bindung reaktive funktionelle Gruppe, n für eine Zahl von 1 bis 10, m für eine Zahl von 1 bis 10 und r für eine Zahl von 0 bis 10 steht, wobei die Zahl der Ankergruppen L im gesamten Blockcopolyurethan 1 bis n*m+1 (Formel I) bzw. 1 bis n*r+m (Formel II) beträgt.

7. Magnetdispersion, mindestens enthaltend ein Bindemittel nach Anspruch 5 oder 6 und mindestens ein magnetisches oder magnetisierbares Material.

8. Verfahren zur Herstellung eines Polyurethans nach einem der Ansprüche 1 bis 4, dadurch gekennzeichnet, daß mindestens ein mindestens difunktionelles lineares oder verzweigtes Polyurethanpräpolymeres mit NCO-Endgruppen als Hartsegment A mit mindestes einem linearen oder verzweigten, mindestens eine gegenüber NCO-Gruppen reaktive funktionelle Gruppe aufweisenden Weichsegment B umgesetzt wird.

9. Magnetisches Aufzeichnungsmedium, mindestens enthaltend ein Bindemittel nach Anspruch 5 oder 6 oder hergestellt nach Anspruch 14.

10. Magnetisches Aufzeichnungsmedium nach Anspruch 9, dadurch gekennzeichnet, daß es als mindestens zweilagige Verbundfolie ausgebildet ist.

11. Verwendung eines Polyurethans gemäß einem der Ansprüche 1 bis 4 oder hergestellt gemäß Anspruch 8, oder eines Bindemittels gemäß Anspruch 5 oder 6, oder einer Magnetdispersion gemäß Anspruch 7 zur Herstellung magnetischer Aufzeichnungsmedien.
